# EUROPÄISCHE PATENTSCHRIFT

(11) **EP 2 687 800 B1**
(45) Veröffentlichungstag und Bekanntmachung des Hinweises auf die Patenterteilung: **01.11.2017**
(21) Anmeldenummer: 13173183.8
(22) Anmeldetag: 21.06.2013
(51) Int. Cl.: F27B 3/20, F23C 5/06, C21C 5/52, B25J 9/06, B25J 9/10

(54) **Brennerhalterung für einen Brenner einer Schmelzwanne**
Burner mount for a burner of a melting bath
Support de brûleur pour un brûleur d'une cuve de fusion

(30) Priorität: 18.07.2012 DE 102012014154
(43) Veröffentlichungstag der Anmeldung: 22.01.2014
(73) Patentinhaber: Horn Glass Industries AG, 95703 Plößberg (DE); Gerresheimer Lohr GmbH, 97816 Lohr (DE)
(72) Erfinder: Gallenberger, Sebastian, 92637 Theisseil (DE); Bouziane, Mohammed, 92697 Georgenberg (DE); Soukup, Wilhelm, 92714 Pleystein (DE); Jörg Buchmayer, 97753 Karlstadt (DE)
(74) Vertreter: Blaumeier, Jörg

(56) Entgegenhaltungen:
- EP-A1- 0 060 483
- US-A- 1 299 968
- US-A- 2 336 269
- US-A- 3 703 968
- US-A- 4 302 179
- US-A1- 2003 066 373

## Beschreibung

Die Erfindung betrifft eine Brennerhalterung für einen Brenner einer Schmelzwanne, umfassend einen Halteabschnitt zur Befestigung des Brenners sowie einen Montageabschnitt zur Befestigung der Halterung an einer Schmelzwanne.
Schmelzwannen dienen dazu, feste Materialien aufzuschmelzen, um eine Schmelze mit einer vorbestimmten Zusammensetzung zu erhalten, die sodann aus der Schmelzwanne gezogen und weiterverarbeitet wird. Am bekanntesten sind hierbei Glasschmelzwannen als Teil von Schmelzöfen, in die das aufzuschmelzende Gemenge gegeben wird, und aus denen die erhaltene Glasschmelze sodann abgezogen wird. Um das Gemenge aufzuschmelzen sind beachtlich hohe Temperaturen erforderlich, wozu Brennstoff verbrannt wird. Dies geschieht unter Verwendung in der Regel mehrerer Brenner, die seitlich entlang der Schmelzwanne angeordnet sind und durch entsprechende wannenseitige Durchbrechungen in der Wannenwand in die Schmelzwanne ragen respektive hierüber Zugang haben.
Die Brenner sind jeweils an einer Brennerhalterung angeordnet, die ihrerseits wiederum wannenseitig fixiert ist. Über die Brennerhalterung ist es möglich, die Position respektive Ausrichtung des Brenners relativ zur Schmelzwanne und damit auch relativ zur Oberfläche der in der Wanne befindlichen Schmelze auszurichten. Das heißt, dass hierüber der Winkel, unter dem der Brenner, der in der Regel als längliche Brennerlanze ausgeführt ist, im Raum positioniert ist und folglich in die Wanne einbläst, verändert und eingestellt werden kann. Diese Veränderbarkeit des Winkels ist für das Abschmelzverhalten des Gemenges in der Wanne relevant, wie auch für die Lage des sogenannten Hotspots, also des Ortes der höchsten Temperatur, der wiederum ausschlaggebend für das Konvekverhalten innerhalb der Schmelze ist. Solche Brenner kommen bei unterschiedlichen Schmelzwannentypen wie U-Flammenwannen oder Querflammenwannen zum Einsatz.

Die bisherige Verstellung ist jedoch sehr aufwändig, sie erfolgt rein manuell, indem diverse Verbindungen zu öffnen sind, die es ermöglichen, den Brenner bewegen und verstellen zu können, und die anschließend wieder festzuziehen sind, damit der Brenner fixiert werden kann. Dabei ist darauf zu achten, dass die Brennerspitze positionsfest bleibt, mithin also letztlich ihre Position innerhalb der Wannenöffnung nicht ändert, sondern lediglich im Raumwinkel verstellt wird. Dies deshalb, als natürlich bei einer Positionsänderung das Problem besteht, dass die Brennerspitze zu nahe an der Wannenöffnung steht, oder versehentlich sogar etwas zu weit aus dieser herausgezogen wird etc. All dies macht die manuelle Verstellung kompliziert und aufwändig. Eine für einen Brenner geeignete Halterung gemäß dem Oberbegriff von Anspruch 1 ist in US 3 703 968 offenbart. Der Erfindung liegt damit das Problem zugrunde, eine Brennerhalterung für einen solchen lanzenförmigen Brenner anzugeben, die auf einfache Weise eine exakte Verstellung der Brennerlanze erlaubt, verbunden mit der Möglichkeit, dass die Brennerspitze positionsfest bleibt.

Zur Lösung dieses Problems ist eine Brennerhalterung gemäß Anspruch 1 vorgesehen. Bei der erfindungsgemäßen Brennerhalterung ist ein Parallelkurbelgetriebe vorgesehen, über das der Halteabschnitt, an dem die Brennerlanze befestigt wird, relativ zum Montageabschnitt, über den die Brennerhalterung wannenseitig fixiert wird, beweglich ist. Dieses Parallelkurbelgetriebe ermöglicht es, dass einerseits durch eine einfache in den Parallelkurbeltrieb eingetragene Stellbewegung die Brennerbewegung initiiert wird, und es ermöglicht es andererseits, dass bei montiertem Brenner die Spitze der Brennerlanze ortsfest verbleibt. Es ändert sich also die Raumlage bzw. der Raumwinkel des Brenners bei Betätigung des Parallelkurbelgetriebes, die Spitze jedoch verbleibt positionsfest relativ zur Wannenöffnung.

Da letztlich lediglich ein Stellbewegungseintrag in das Parallelkurbelgetriebe erforderlich ist, um die gleichförmige Brennerverstellung zu ermöglichen, kann folglich die Brennereinstellung besonders einfach und schnell erfolgen, bei gleichzeitiger hoher Präzision und Sicherheit, dass die Spitze stets in der korrekten Position ist.

Das Parallelkurbelgetriebe weist erfindungsgemäß vier relativ zueinander verschwenkbare Streben auf, von denen zwei erste Streben am Montageabschnitt und zwei weitere Streben am Halteabschnitt schwenkgelagert sind, wobei die Streben untereinander entsprechend gelenkig miteinander verbunden sind. Der konkrete Aufbau eines solchen Parallelkurbelgetriebes wird im Folgenden noch detailliert beschrieben. Die Erfindung sieht vor, dass zwei parallel angeordnete Parallelkurbelgetriebe vorgesehen sind, die zumindest teilweise über die jeweiligen Schwenkachsen, um die die Streben schwenkbar sind, miteinander verbunden ist. Es ist hier also ein symmetrischer Aufbau vorgesehen, wobei die beiden Parallelkurbelgetriebe einerseits an dem Montageabschnitt befestigt sind, und andererseits am Halteabschnitt schwenkgelagert sind, wobei sie in diesem Bereich die Brennerlanze letztlich zwischen sich aufnehmen. Ansonsten sind die beiden Parallelkurbelgetriebe über die noch freien Schwenkachsen miteinander verbunden, das heißt, dass die Schwenkachsen letztlich von einem zum anderen Parallelkurbelgetriebe durchgreifen. Die Erfindung sieht die Integration eines Stellelements zum automatischen Verstellen des oder der Parallelkurbelgetriebe vor. Dieses automatische Stellelement entlastet folglich den Bediener davon, in diesem Bereich manuelle Tätigkeiten vornehmen zu müssen. Vielmehr kann unter Verwendung des automatischen Stellelements die entsprechende Brennerverstellung auch von extern gesteuert werden. Im Falle einer solchen externen Steuerung besteht darüber hinaus die Möglichkeit, diese unter Erfassung des Ist-Brennerwinkels und Vorgabe eines Soll-Brennerwinkels auch hoch exakt vorzunehmen. Entsprechende Mess- oder Sensorelemente betreffend die Ist- und Sollwinkel etc sind ohne weiteres halterungsseitig integrierbar. Auch ist für die gesamte Verstellung nur ein einziges Stellelement erforderlich, so dass der Halterungsaufbau vereinfacht ist.

Das Stellelement selbst ist erfindungsgemäß einerseits am Montageabschnitt und andererseits am Schwenklager, über das zwei Streben miteinander schwenkbar verbunden sind, befestigt. Hierüber lässt sich auf sehr einfache Weise eine entsprechende Stellbewegung über das Stellelement in die Parallelkurbelgetriebe eintragen.

Als Stellelement kann beispielsweise ein pneumatischer oder hydraulischer Zylinder verwendet werden, der über eine entsprechende Pneumatik- oder Hydrauliksteuerung angesteuert werden kann. Die zugeordnete Steuerungseinrichtung kann darüber hinaus wie beschrieben mit entsprechenden Sensorelementen kommunizieren, sofern solche vorgesehen sind, um entsprechende Winkelinformationen abzugreifen.
Alternativ dazu ist auch die Verwendung eines über einen Motor betätigbaren Gewindetriebs, insbesondere eines Kugelgewindetriebs, als Stellelement denkbar. Auch hier kann der Motor über eine entsprechende Steuerungseinrichtung, die gegebenenfalls wiederum entsprechende Winkelsensordaten vorliegen hat, angesteuert und der Gewindetrieb betätigt werden.
Um nicht nur eine Schwenkverstellung des Brenners zu ermöglichen, was über die Parallelkurbelgetriebe erfindungsgemäß realisiert wird, sondern auch eine Höhenverstellbarkeit zu ermöglichen, um den Brenner grundsätzlich in seiner Höhe respektive Vertikalposition relativ zur Wannenöffnung zu positionieren, sieht eine zweckmäßige Weiterbildung der Erfindung vor, dass die Parallelkurbelgetriebe über eine Verstelleinrichtung relativ zum Montageabschnitt verstellbar und arretierbar sind. Über diese Verstelleinrichtung kann also eine grundsätzliche Höhenausrichtung erfolgen. Die Verstelleinrichtung kann dabei einen Gewindetrieb umfassen oder als solche ausgebildet sein. Sie kann manuell zu bedienen sein, beispielsweise über eine einfache Kurbel oder ein Drehrad, über das eine Gewindestange gedreht wird, auf welcher die Parallelkurbelgetriebe über eine geeignete Führung laufen, oder Ähnliches. Daneben sind natürlich wiederum motorische Ausgestaltungen beispielsweise unter Verwendung eines Gewindetriebs mit zugeordnetem Stellmotor denkbar.

Neben der Brennerhalterung selbst betrifft die Erfindung ferner eine Schmelzwanne umfassend wenigstens eine Brennerhalterung der beschriebenen Art. Üblicherweise sind an einer solchen Schmelzwanne, beispielsweise einer Glasschmelzwanne, selbstverständlich mehrere solcher Brennerhalterungen nebst zugeordneten Brennern verbaut.
Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Perspektivansicht einer erfindungsgemäßen Brennerhalterung mit Brenner in ihrer Montagestellung an einer Schmelzwanne, in einer Teilansicht,
- Fig. 2: eine Seitenansicht der Anordnung aus Fig. 1 mit einer in einer ersten Position befindlichen Brennerhalterung,
- Fig. 3: eine Seitenansicht entsprechend Fig. 2 mit einer verstellten Brennerhalterung, und
- Fig. 4: eine Perspektivansicht einer erfindungsgemäßen Brennerhalterung einer zweiten Ausführungsform.

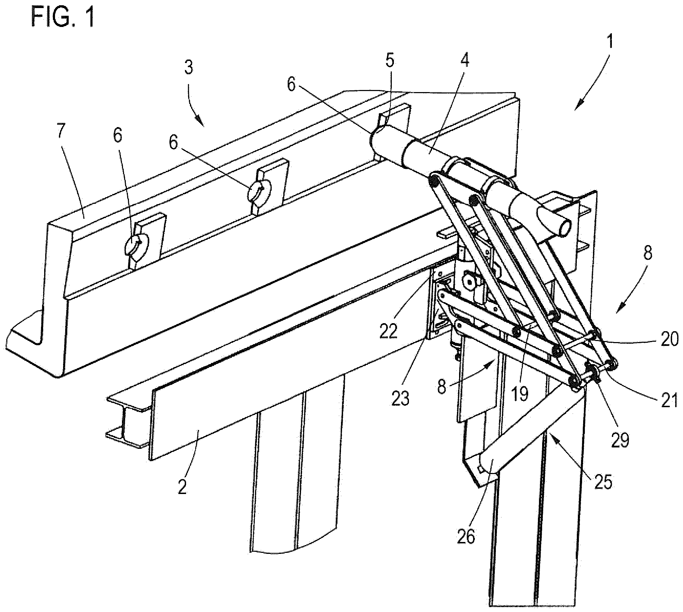

Fig. 1 zeigt eine erfindungsgemäße Brennerhalterung 1, die an einem Traggestell 2 einer Schmelzwanne 3, beispielsweise einer Glasschmelzwanne, angeordnet ist. In der Brennerhalterung 1 ist in einem Halteabschnitt 13 eine Brennerlanze 4 aufgenommen, die über die Halterung fixiert und verstellbar ist. Die Brennerlanze 4 weist eine Brennerspitze 5 auf, die in eine Öffnung 6, von denen, nachdem üblicherweise mehrere Brennerlanzen 4 vorgesehen sind, mehrere an der Schmelzwannenwand 7 vorgesehen sind, einragt. Die erfindungsgemäße Brennerhalterung lässt nun eine Winkelverstellung der Brennerlanze 4 zu, das heißt, dass die Brennerlanze 4 auf- und abgeschwenkt werden kann, wobei die Brennerspitze 5 jedoch positionsfest bleibt, mithin also der Mittelpunkt, um den die Brennerlanze 4 über die Brennerhalterung 1 verschwenkt wird, letztlich die Brennerspitze 5 ist.

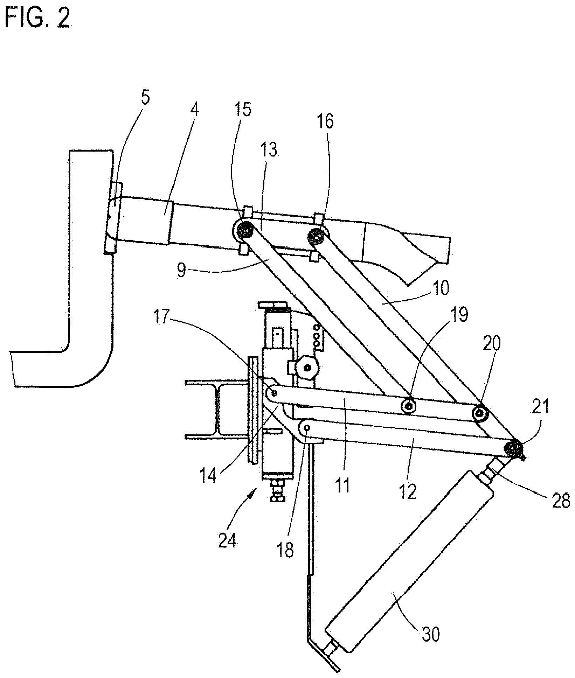

Zu diesem Zweck weist die Brennerhalterung 1 zwei parallel geschaltete Parallelkurbelgetriebe 8 auf, die jeweils identisch ausgeführt sind, weshalb im Folgenden nur eines der beiden Parallelkurbelgetriebe 8 näher beschrieben wird. Jedes der Parallelkurbelgetriebe 8 umfasst vier Streben 9, 10, 11, 12 (siehe Fig. 2), wobei die beiden Streben 9, 10 schwenkbar an einem Halteabschnitt 13 für die Brennerlanze 4 angeordnet sind, während die beiden Streben 11, 12 schwenkbar an einem Montageabschnitt 14, über den die Brennerhalterung 1 wannenseitig fixiert wird, angeordnet sind. Die Streben 9, 10 schwenken also um die Schwenkachsen 15, 16, während die Streben 11, 12 um die Schwenkachsen 17, 18 verschwenken. Darüber hinaus sind die Streben 9, 10, 11, 12 auch teilweise untereinander schwenkbar verbunden. Die Strebe 9 ist mit der Strebe 11 schwenkbar verbunden, und zwar in der Schwenkachse 19. Die Strebe 10 ist schließlich über die Schwenkachse 20 mit der Strebe 11 und über die Schwenkachse 21 mit der Strebe 12 beweglich verbunden.

Wie Fig. 1 zeigt, sind die beiden Streben 9 und 10 beidseits des Halteabschnitts 13 angeordnet, entsprechend sind auch die Streben 11 und 12 der beiden Parallelkurbelgetriebe 8 beabstandet zueinander positioniert. Die Schwenkachsen 19, 20 und 21 erstrecken sich, wie Fig. 1 zeigt, zwischen beiden Parallelkurbelgetriebe 8, verbinden also beide miteinander.

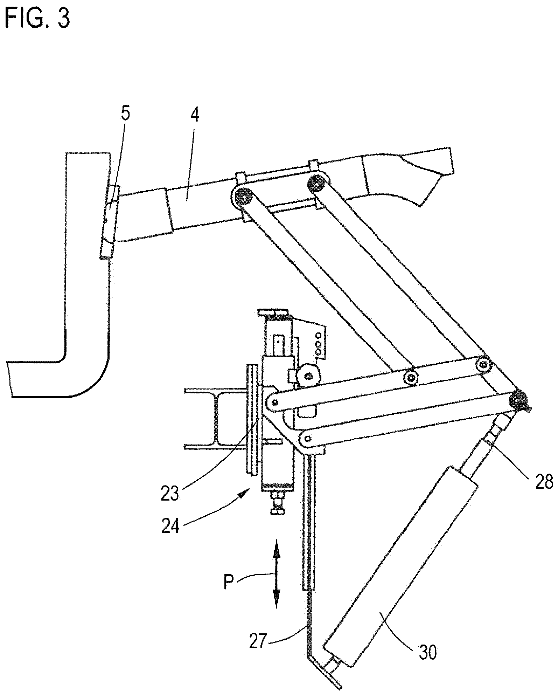

Die beiden Parallelkurbelgetriebe 8 sind wie beschrieben an dem Montageabschnitt 14 angeordnet. Dieser Montageabschnitt 14 ist letztlich zweiteilig ausgebildet. Er umfasst zum einen den Befestigungsabschnitt 22, über den die Brennerhalterung 1 unmittelbar wannenseitig festgelegt ist. Er umfasst des Weiteren einen Befestigungsabschnitt 23, an dem die beiden Streben 10, 11 schwenkbefestigt sind und der über eine Verstelleinrichtung 24 relativ zum ersten Befestigungsabschnitt 22 vertikal beweglich ist, so dass die beiden Parallelkurbelgetriebe 8 und mit ihnen die Brennerlanze 4 vertikal bewegt werden können. Die Verstelleinrichtung 24 ist beispielsweise als Gewindetrieb ausgebildet. Dies ermöglicht es, beispielsweise manuell die Brennerhalterung 1 nach ihrer Montage an der Schmelzwanne verstellen und positionieren zu können, wobei selbstverständlich die Verstelleinrichtung in der gewünschten Einstellposition sodann fixiert werden kann. Die Höhenbeweglichkeit ist in Fig. 3 durch den Doppelpfeil P dargestellt.

Weiterhin ist ein Stellelement 25 vorgesehen, im gezeigten Ausführungsbeispiel in Form eines Hydraulik- oder Pneumatikzylinders 26, der der Verstellung respektive Bewegung der beiden Parallelkurbelgetriebe 8 und damit auch der Brennerlanze 4 dient. Der Hydraulik- oder Pneumatikzylinder 26 ist zum einen an einem Halteabschnitt 27 des Befestigungsabschnitts 23 schwenk- oder kippbar angeordnet, er ist dort lagefest abgestützt. Das andere Ende, also der ausfahrbare Kolben 28, ist, siehe Fig. 1, an der Schwenkachse 21 in einer geeigneten Schwenkhalterung 29 befestigt. Wird also der Kolben 28 ausgefahren oder eingezogen, so wird folglich auch das Parallelkurbelgetriebepaar 8 bewegt.

Die Funktion dieser Stelleinrichtungen und damit der Parallelkurbelgetriebe 8 ergibt sich aus den Fig. 2 und 3. Fig. 2 zeigt eine Situation, in der der Kolben 28 eingefahren ist, das heißt, er befindet sich im Zylinder 30. Wie Fig. 2 zeigt, befindet sich auch die Brennerlanze 4 mit ihrer Brennerspitze 5 in einer ersten Einstellposition, in der sie, siehe Fig. 2, leicht schräg nach oben mit der Spitze weisend angestellt ist.

Soll nun eine Winkelverstellung erfolgen, mithin also die Brennerlanze 4 einen anderen Raumwinkel einnehmen, gleichzeitig aber die Brennerspitze 5 positionsfest bleiben, so wird durch Ansteuerung des Stellelements 25 über eine geeignete Steuerungseinrichtung, die hier die Zufuhr von Druckluft oder Hydraulikflüssigkeit steuert, der Kolben 28 ausgefahren. Der Kolben 28 steht in Verbindung mit der Schwenkachse 21. Jede noch so geringe Ausfahrbewegung führt dazu, dass der Kolben 28 auf die Schwenkachse 21 und damit auf die Parallelkurbelgetriebe 8 drückt. Diese werden um die beiden Schwenkachsen 17, 18 herumgeschwenkt, gleichzeitig schwenken aber auch die Streben 9, 10 relativ zu den Streben 11, 12 um die Schwenkachsen 19, 20, 21, wie auch die Streben 9, 10 halteabschnittsseitig um die Schwenkachsen 15, 16 verschwenken. Die Bewegung ist infolge der Strebenkopplung derart, dass die Brennerlanze 4 letztlich um die Brennerspitze 5 als Drehpunkt verschwenkt wird. Das in den Fig. 2 und 3 gezeigte rechte Ende der Brennerlanze 4 wird also quasi um die Brennerspitze 5 als Drehpunkt herum hochgeschwenkt. Der Kolben 28 wird soweit ausgefahren, bis die gewünschte Winkelverstellung vorgenommen respektive der gewünschte Raumwinkel erreicht ist. In Fig. 3 ist ersichtlich, dass hier die Brennerlanze nun mit der Brennerspitze 5 nach unten zeigt.

Selbstverständlich ist es möglich, jedweden beliebigen Zwischenwinkel zwischen der maximalen Einfahrstellung und der maximalen Ausfahrstellung des Kolbens 28 fest und arretiert einzunehmen. Die Steuerung geschieht wie ausgeführt über eine zentrale Steuerungseinrichtung, die bevorzugt sämtliche wannenseitig vorgesehenen Stellelemente 25 steuert, die jedoch bevorzugt über die Steuerungseinrichtung separat angesteuert werden können, um jede Brennerhalterung und damit jede Brennerlanze 4 individuell verstellen zu können. Die Verstellung kann in Abhängigkeit etwaiger eingegebener Programmbefehle betreffend den Verstellwinkel erfolgen. Das heißt, dass der Bediener beispielsweise an einem geeigneten Bedienpult den gewünschten Brennerlanzenwinkel eingibt, der sodann seitens der Steuereinrichtung in Verbindung mit der oder den Brennerhalterungen 1 umgesetzt wird. Zu diesem Zweck können halterungsseitig ein oder mehrere Sensoren vorgesehen sein, die den Ist-Winkel, den die Brennerlanze 4 einnimmt, messen, worüber sodann die verstellungsbedingte Winkeländerung erfasst werden kann. Der Verstellbetrieb endet automatisch, wenn der gewünschte Soll-Winkel erreicht ist. Irgendwelche manuellen Tätigkeiten in diesem Zusammenhang sind nicht vonnöten.

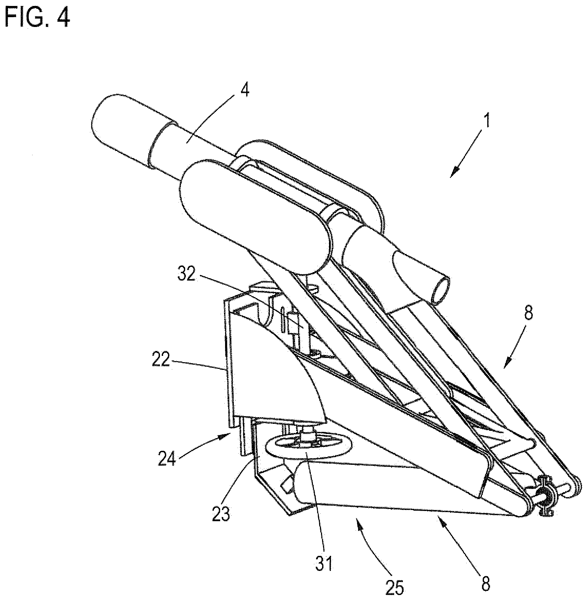

Fig. 4 zeigt in Form einer Prinzipdarstellung eine erfindungsgemäße Brennerhalterung 1 für eine Brennerlanze 4, die vom Aufbau her näherungsweise identisch mit der Brennerhalterung 1 aus den Fig. 1 - 3 ist. Auch hier sind also zwei parallel geschaltete Parallelkurbelgetriebe 8 vorgesehen, wie auch ein Stellelement 25, das zum Verschwenken der Brennerlanze 4 dient. Auch hier ist, wie auch bei der Ausführungsform gemäß den Fig. 1 - 3 vorteilhaft nur ein einziges Stellelement erforderlich, um den Verstellbetrieb vorzunehmen, das heißt, dass durch die Tätigkeit eines einzigen Stellmittels, hier exemplarisch des Hydraulik- oder Pneumatikzylinders 26, der komplette Schwenkbetrieb möglich ist.

Während bei der in Fig. 4 gezeigten Ausführungsform auch eine vertikale Verstellmöglichkeit vorgesehen ist, in dem der Montageabschnitt 14 aus einem ersten Befestigungsabschnitt 22 und einem zweiten, relativ zu diesem beweglichen Befestigungsabschnitt 23 besteht, ist im Unterschied zu der in den Fig. 1 - 3 gezeigten Verstelleinrichtung 24 umfassend einen Gewindetrieb, beispielsweise einen Kugelgewindetrieb, bei der Ausführung nach Fig. 4 ein Handrad 31 vorgesehen, über das eine Gewindespindel 32 gedreht werden kann, auf der eine entsprechende Mitnehmermutter läuft, über die der zweite Befestigungsabschnitt 23 mit samt den Parallelkurbelgetrieben 8 etc. mitgenommen und vertikal bewegt wird.

## Patentansprüche

1. Brennerhalterung für einen Brenner (4) einer Schmelzwanne, umfassend einen Halteabschnitt (13) zur Befestigung des Brenners, einen Montageabschnitt (14) zur Befestigung der Halterung an einer Schmelzwanne oder einem Schmelzwanne zugeordneten Wannenelement, und zwei parallel angeordnete Parallelkurbelgetriebe (8) über welche der Halteabschnitt (13) mit dem Montageabschnitt (14) verbunden und darüber relativ zum Montageabschnitt (14) bewegbar ist, wobei jedes der Parallelkurbelgetriebe (8) vier relativ zueinander veschwenkbare Streben (9, 10, 11, 12) aufweist, von denen zwei erste Streben (11, 12) am Montageabschnitt (14) und zwei zweite Streben (9, 10) am Halteabschnitt (13) schwenkgelagert sind, wobei die zwei parallel angeordneten Parallelkurbelgetriebe (8) zumindest teilweise über die jeweiligen Schwenkachsen (19, 20, 21) miteinander verbunden sind, welche die jeweiligen Streben (9, 10, 11, 12) verbinden und um welche die Streben schwenkbar sind, und wobei die Brennerhalterung ein Stellelement (25) zum automatischen Verstellen der Parallelkurbelgetriebe (8) umfasst,
**dadurch gekennzeichnet, dass** das Stellelement (25) einerseits am Montageabschnitt (14) und andererseits an einer Schwenkachse (21), über die zwei Streben (10,12) miteinander schwenkbar verbunden sind, befestigt ist.

2. Brennerhalterung nach Anspruch 1, **dadurch gekennzeichnet, dass** das Stellelement (25) ein pneumatischer oder hydraulischer Zylinder (26) oder ein über einen Motor betätigbarer Gewindetrieb, insbesondere ein Kugelgewindetrieb ist.

3. Brennerhalterung nach einem der vorangehenden Ansprüche, **dadurch gekennzeichnet, dass** die Parallelkurbelgetriebe (8) über eine Verstelleinrichtung (24) höhenverstellbar sind.

4. Brennerhalterung nach Anspruch 3, **dadurch gekennzeichnet, dass** die Verstelleinrichtung (24) einen Gewindetrieb umfasst.

5. Schmelzwanne, umfassend wenigstens eine Brennerhalterung (1) nach einem der vorangehenden Ansprüche.

## Claims

1. Burner holder for a burner (4) of a melting vat, comprising a holding section (13) for fastening the burner, a mounting section (14) for fastening the holder to a melting vat or a vat element which is assigned to the melting vat, and two parallel crank mechanisms (8) which are arranged in parallel and via which the holding section (13) is connected to the mounting section (14) and can be moved via said parallel crank mechanisms (8) relative to the mounting section (14), wherein each of the parallel crank mechanisms (8) has four struts (9, 10, 11, 12) which can be pivoted relative to one another and of which two first struts (11, 12) are mounted pivotably on the mounting section (14) and two second struts (9, 10) are mounted pivotably on the holding section (13), wherein the two parallel crank mechanisms (8) which are arranged in parallel are connected to one another at least partially via the respective pivot pins (19, 20, 21) which connect the respective struts (9, 10, 11, 12) and about which the struts can be pivoted, and wherein the burner holder comprises an actuating element (25) for the automatic adjustment of the parallel crank mechanisms (8), **characterized in that** the actuating element (25) is fastened on one side on the mounting section (14) and on the other side on a pivot pin (21), via which two struts (10, 12) are connected to one another pivotably.

2. Burner holder according to Claim 1, **characterized in that** the actuating element (25) is a pneumatic or hydraulic cylinder (26) or a screw drive which can be actuated via a motor, in particular a ball screw drive.

3. Burner holder according to one of the preceding claims, **characterized in that** the parallel crank mechanisms (8) are height-adjustable via an adjusting device (24).

4. Burner holder according to Claim 3, **characterized in that** the adjusting device (24) comprises a screw drive.

5. Melting vat, comprising at least one burner holder (1) according to one of the preceding claims.

## Revendications

1. Support de brûleur pour un brûleur (4) d'une cuve de fusion, comprenant une portion de fixation (13) pour la fixation du brûleur, une portion de montage (14) pour fixer le support à une cuve de fusion ou à un élément de cuve associé à la cuve de fusion, et deux mécanismes à manivelle parallèles (8) disposés parallèlement, par le biais desquels la portion de fixation (13) est connectée à la portion de montage (14) et peut en outre être déplacée par rapport à la portion de montage (14), chacun des mécanismes à manivelle parallèles (8) présentant quatre barres pouvant pivoter les unes par rapport aux autres (9, 10, 11, 12), dont deux premières barres (11, 12) sont supportées de manière pivotante sur la portion de montage (14) et deux deuxièmes barres (9, 10) sont supportées de manière pivotante sur la portion de fixation (13), les deux mécanismes à manivelle parallèle (8) disposés parallèlement étant connectés l'un à l'autre au moins en partie par le biais des axes de pivotement respectifs (19, 20, 21) qui relient les barres respectives (9, 10, 11, 12) et autour desquels les barres peuvent pivoter, et le support de brûleur comprenant un élément de réglage (25) pour régler automatiquement les mécanismes à manivelle parallèle (8),
**caractérisé en ce que** l'élément de réglage (25) est fixé d'une part à la portion de montage (14) et d'autre part à un axe de pivotement (21) par le biais duquel les deux barres (10, 12) sont connectées l'une à l'autre de manière pivotante.

2. Support de brûleur selon la revendication 1, **caractérisé en ce que** l'élément de réglage (25) est un cylindre pneumatique ou hydraulique (26) ou un mécanisme à vis pouvant être commandé par le biais d'un moteur, en particulier une vis d'entraînement à bille.

3. Support de brûleur selon l'une quelconque des revendications précédentes, **caractérisé en ce que** les mécanismes à manivelle parallèle (8) peuvent être réglés en hauteur par le biais d'un dispositif de réglage (24).

4. Support de brûleur selon la revendication 3, **caractérisé en ce que** le dispositif de réglage (24) comprend un mécanisme à vis.

5. Cuve de fusion comprenant au moins un support de brûleur (1) selon l'une quelconque des revendications précédentes.
